# EUROPÄISCHE PATENTSCHRIFT

(11) **EP 2 384 635 B1**
(45) Veröffentlichungstag und Bekanntmachung des Hinweises auf die Patenterteilung: **02.10.2013**
(21) Anmeldenummer: 11164769.9
(22) Anmeldetag: 04.05.2011
(51) Int. Cl.: A22C 11/08

(54) **Füllmaschine zum Abfüllen pastöser Masse**
Filling machine for filling paste masses
Machine de remplissage pour le remplissage de masses pâteuses

(30) Priorität: 06.05.2010 DE 102010028683
(43) Veröffentlichungstag der Anmeldung: 09.11.2011
(73) Patentinhaber: Karl Schnell GmbH & Co. KG, 73650 Winterbach (DE)
(72) Erfinder: Schnell, Ernst-Otto, 73650, Winterbach (DE); Klingele, Robert, 88400, Biberach (DE)
(74) Vertreter: Kohler Schmid Möbus

(56) Entgegenhaltungen:
- US-A- 5 092 528
- "European Norm EN 12463:2004 for Food manufacturing equipment, Filling machines (food), Meat, Equipment safety, Safety measures, Hazards, Occupational safety, Hygiene, Verification", EUROPEAN NORM EN 12463:2004,, Nr. European Norm EN 12463:2004, 1. Januar 2004 (2004-01-01), Seiten 26-32, XP008150251,

## Beschreibung

Die vorliegende Erfindung betrifft eine Füllmaschine zum Abfüllen pastöser Masse, umfassend: einen Fülltrichter, in dem eine drehbare Zuführeinrichtung zum Zuführen der pastösen Masse zu einem Förderwerk angebracht ist, eine bewegliche Tritthilfe für einen Bediener, die in einer Gebrauchsstellung das Erreichen einer Standfläche zur Reinigung des Fülltrichters ermöglicht, wobei in der Gebrauchsstellung die Zuführeinrichtung gegen Verdrehen verriegelt ist, sowie eine im Bereich der Standfläche angeordnete Zweihandschaltung, die beim Betätigen die Verriegelung aufhebt.

Füllmaschinen, bei denen eine pastöse Masse, z.B. in Form von Wurstbrät, über einen Fülltrichter unter Zuhilfenahme einer Zuführeinrichtung einem Förderwerk zugeführt wird, um die mittels des Förderwerks portionierte Masse über ein Füllrohr z.B. in Wursthüllen auszustoßen, sind aus dem Stand der Technik bekannt.

An derartige Füllmaschinen sind hohe Sicherheits- und Hygieneanforderungen zu stellen, die in der Europäischen Norm EN 12463:2004 dargestellt sind. So ist beispielsweise in Abschnitt 5.3.2.1.9.1 dieser Norm angegeben, dass Auftritte oder Leitern, von denen aus Gefahrenstellen innerhalb des Fülltrichters erreichbar sind, verriegelt sein müssen. Werden die Auftritte oder Leitern in eine Gebrauchsstellung bewegt, wird die Verriegelung aktiviert und die Maschinenfunktionen werden gesperrt, d.h. es werden insbesondere das Förderwerk und die drehbare Zuführeinrichtung deaktiviert, um einen auf einer Standfläche der Auftritte oder Leitern stehenden Bediener, der von der Standfläche aus das Innere des Fülltrichters erreichen kann, vor beweglichen Teilen zu schützen.

Da der Bediener beim Betätigen einer Zweihandschaltung am Rand des Fülltrichters mit seinen Armen bzw. Händen nicht an die Gefahrenstellen in dem Fülltrichter herankommen kann, kann die Verriegelung bei der Betätigung der Zweihandschaltung aufgehoben werden, wie in Abschnitt 5.3.2.1.9.2 der Europäischen Norm dargestellt ist. Das Aufheben der Verriegelung ist insbesondere bei einer Reinigung des Fülltrichters beim Chargenwechsel günstig, bei der vermieden werden soll, dass es zu einer Vermischung unterschiedlicher Brätsorten von aufeinander folgenden Chargen kommt.

Bei einem solchen Chargenwechsel steigt ein erster Bediener auf die Standfläche der Füllmaschine und kratzt mittels eines Werkzeugs die Brätreste in dem Fülltrichter zusammen, wobei er diese nach unten in den Förderwerksbereich drückt. Der erste Bediener aktiviert dann die Zweihandschaltung, um die Verriegelung aufzuheben und das Förderwerk und ggf. weitere Maschinenfunktionen für einen weiteren Bediener aktivierbar zu machen, der sich an einer Bedieneinheit der Füllmaschine befindet, von der aus der Fülltrichter nicht zugänglich ist.

Der weitere Bediener aktiviert dann das Förderwerk und fährt dieses so lange leer, bis kein Wurstbrät mehr durch das Füllrohr ausgestoßen wird. Zusätzlich kann hierbei durch den weiteren Bediener auch die Zuführeinrichtung in dem Fülltrichter gedreht werden, so dass auch derjenige Bereich in dem Fülltrichter für den ersten Bediener zugänglich wird, der vor der Drehung von der Zuführeinrichtung verdeckt war. Der oben beschriebene Arbeitsvorgang kann sich ggf. mehrmals wiederholen, bis das gesamte Wurstbrät aus dem Fülltrichter entfernt worden ist.

### Aufgabe der Erfindung

Es ist die Aufgabe der vorliegenden Erfindung, eine Füllmaschine der eingangs genannten Art dahingehend weiterzubilden, dass die Reinigung des Fülltrichters vereinfacht und verbessert bzw. die Sicherheit beim Reinigen des Fülltrichters erhöht wird.

### Gegenstand der Erfindung

Diese Aufgabe wird durch eine Füllmaschine gemäß Anspruch 1 gelöst.

Eine Reinigung des Fülltrichters beim Chargenwechsel kann somit durch einen einzigen Bediener erfolgen. Insbesondere kann hierbei vermieden werden, dass der Bediener zunächst von der Füllmaschine herabsteigen, die Tritthilfe aus der Gebrauchsstellung bewegen und sich zu einer Bedieneinheit der Füllmaschine begeben muss, um eine Veränderung der Winkel-Stellung der Zuführeinrichtung zu bewirken, wobei er anschließend die Tritthilfe wieder in die Gebrauchsstellung überführen muss, um von der Standfläche aus den Fülltrichter weiter reinigen zu können. Auf diesen zeitaufwändigen Vorgang wird der Bediener in der Regel verzichten und stattdessen eine geringfügige Vermischung der pastösen Massen in Kauf nehmen, wodurch aber die Qualität des Endprodukts beeinträchtigt wird.

Um während der Betätigung der Zweihandschaltung bzw. bei betätigter Zweihandschaltung eine automatische Drehung der Zuführeinrichtung zu bewirken, ist die Zweihandschaltung mit einer Steuerungseinrichtung zur Ansteuerung eines Antriebs der Zuführeinrichtung verbunden. Beim Betätigen der Zweihandschaltung wird ein Steuersignal an die Steuerungseinrichtung übermittelt, welches die Steuerungseinrichtung dazu veranlasst, den Antrieb der Zuführeinrichtung zu aktivieren. Anders als beim Füllbetrieb, bei dem die Drehung des Förderwerks mit der Drehung der Zuführeinrichtung synchronisiert und sehr schnell erfolgt, wird die Zuführeinrichtung bei der Aktivierung mit Hilfe der Zweihandschaltung mit einer vorgegebenen (Winkel-)Geschwindigkeit bewegt, die im Vergleich zur Geschwindigkeit beim Füllbetrieb wesentlich geringer ist.

Bevorzugt ist die Zuführeinrichtung durch eine Zubringerkurve gebildet. Die umlaufende Zubringerkurve dient der Zuführung von in dem Fülltrichter vorhandenem Wurstbrät zur Mitte hin und nach unten zum Förderwerk. An der Außenseite der Zubringerkurve befindet sich in der Regel ein Schaber, der das Wurstbrät vom Trichterrand löst. Es versteht sich, dass zusätzlich oder alternativ zur Zubringerkurve auch andere Zuführeinrichtungen, beispielsweise Förderschnecken oder dergleichen in dem Fülltrichter angeordnet sein können. Auch diese können ggf. durch die Zweihandschaltung in Drehung versetzt werden.

Es hat sich als günstig erwiesen, wenn sich die Zuführeinrichtung mit einer insbesondere konstanten Drehzahl von weniger als 5 Umdrehungen/min, bevorzugt von weniger als 3 Umdrehungen/min dreht, während die Zweihandschaltung aktiviert ist. Bei diesen Drehzahlen kann die Zuführeinrichtung vom Bediener mit ausreichender Präzision in die gewünschte Winkel-Stellung gebracht werden.

Es ist ebenfalls günstig, wenn die Zuführeinrichtung bei aktivierter Zweihandschaltung mit einer insbesondere konstanten Drehzahl von mindestens 0,5 Umdrehungen/min, bevorzugt von mindestens 1 Umdrehung/min gedreht wird. Durch die Wahl von Drehzahlen, die größer als die oben genannten Minimaldrehzahlen sind, wird sichergestellt, dass der Bediener die Zuführeinrichtung rasch in die gewünschte Winkel-Stellung verbringen kann, so dass die Reinigung des Fülltrichters beschleunigt wird.

In einer weiteren Ausführungsform ist die Steuerungseinrichtung zur Ansteuerung eines Antriebs des Förderwerks ausgebildet, um beim Betätigen der Zweihandschaltung den Antrieb des Förderwerks zu aktivieren und damit eine Drehung des Förderwerks zu bewirken. Die Drehung des Förderwerks kann erfolgen, um die pastöse Masse, die bei der Reinigung des Fülltrichters nach unten in den Förderwerksbereich verbracht wurde, über ein Füllrohr auszustoßen. Die Drehung des Förderwerks erfolgt hierbei typischer Weise synchron zur Drehung der Zuführeinrichtung, d.h. beim Betätigen der Zweihandschaltung werden beide Antriebe aktiviert und die Zuführeinrichtung sowie das Förderwerk drehen sich mit einer jeweiligen vorgegebenen Winkelgeschwindigkeit. Alternativ ist es selbstverständlich auch möglich, die beiden Antriebe unabhängig voneinander anzusteuern, so dass beim Betätigen der Zweihandschaltung lediglich die Zuführeinrichtung in Drehung versetzt wird.

In einer vorteilhaften Ausführungsform ist die Standfläche durch eine Standplattform an, insbesondere auf dem Maschinengrundkörper der Füllmaschine gebildet. Das Vorsehen einer Standplattform am Maschinengrundkörper ermöglicht es, die Standfläche verhältnismäßig groß zu dimensionieren und dadurch die Sicherheit des Bedieners zu erhöhen sowie zu verhindern, dass der Bediener Bereiche an der Maschinenoberseite als Standfläche nutzt, die nicht zu diesem Zweck vorgesehen sind. Es versteht sich, dass alternativ die Standfläche lediglich an der Tritthilfe gebildet werden kann, z.B. an der obersten Stufe einer schwenkbaren Leiter.

Ein weiterer Aspekt der Erfindung betrifft eine Füllmaschine gemäß dem Oberbegriff von Anspruch 1 bzw. mit den oben beschriebenen Merkmalen, bei der zumindest ein Teilbereich der Standfläche, insbesondere die gesamte Standfläche, mit der Tritthilfe über ein Gelenk (starr) verbunden und gemeinsam mit der Tritthilfe verschwenkbar ist. Mit Hilfe des verschwenkbaren Teilbereichs der Standfläche kann die Standfläche insgesamt größer dimensioniert werden, was insbesondere vorteilhaft ist, wenn für die Standplattform an der Oberseite des Maschinengrundkörpers nicht genügend Bauraum zur Verfügung steht.

Die Tritthilfe kann hierbei z.B. als schwenkbare Leiter ausgebildet sein. Die schwenkbare Leiter weist am oberen Ende ein Gelenk auf, um das die Leiter von der Gebrauchsstellung, in der die Leiter begehbar ist, in eine Ruhestellung verschwenkt werden kann, in der die Leiter nicht als Tritthilfe genutzt werden kann. Das Gelenk ist hierbei mit einer Steuerungseinrichtung der Füllmaschine verbunden, so dass beim Erreichen der Gebrauchsstellung der Leiter eine Verriegelung aktiviert wird, welche das Förderwerk und die Zuführeinrichtung sperrt.

In einer besonders vorteilhaften Ausführungsform schließt der an dem Gelenk starr angebundene, verschwenkbare Teilbereich der Standfläche bzw. die gesamte Standfläche in der Ruhestellung einen Winkel von 25° oder mehr mit der Horizontalen ein und steht in der Ruhestellung nach oben über den Maschinengrundkörper über. Die Schräglage der verschwenkbaren Standfläche bzw. des verschwenkbaren Teilbereichs der Standfläche macht es für den Bediener unmöglich, diese in der Ruhestellung zu begehen. Das Gelenk, an dem die Tritthilfe an den Maschinengrundkörper angebunden ist, befindet sich typischer Weise etwa auf der Höhe der Oberseite des Grundkörpers, so dass der verschwenkbare Teilbereich in der Ruhestellung nach oben über den Grundkörper übersteht und das Erreichen des Teilbereichs der Standfläche, der als Plattform an der Oberseite des Maschinengrundkörpers ausgebildet ist, für den Bediener erschwert bzw. unmöglich macht.

Um letztere Funktion zu erfüllen ist es günstig, wenn der verschwenkbare Teilbereich mindestens ein Drittel der Fläche der - typischer Weise rechteckigen - Standfläche bildet. Insbesondere sollte der verschwenkbare Teilbereich nicht zu klein gewählt werden, um das unerlaubte Betreten der Standfläche durch einen Bediener wirksam verhindern zu können. Es versteht sich, dass für gewöhnlich die Tritthilfe nur in der Ruhestellung und in der Gebrauchsstellung fixierbar ist und ein Begehen bzw. Nutzen der Tritthilfe in einer Zwischenstellung nicht möglich ist.

Bei einer weiteren Ausführungsform ist ein weiterer Teilbereich der Standfläche über ein weiteres Gelenk an den mit der Tritthilfe verbundenen Teilbereich der Standfläche angebunden. In der Ruheposition der Tritthilfe verlaufen in diesem Fall beide Teilbereiche in der Art eines Daches unter einem jeweiligen Winkel zur Horizontalen und verhindern somit ebenfalls das unbefugte Betreten der Standfläche.

Bei einer besonders vorteilhaften Ausführungsform ist an gegenüberliegenden Rändern der Tritthilfe im Bereich der Standfläche jeweils ein Handlauf (Geländer) vorgesehen. Die Handläufe dienen dem sicheren Erreichen der erhöhten Standfläche und bieten dem Bediener zusätzliche Sicherheit beim Reinigen des Fülltrichters.

Bei einer vorteilhaften Weiterbildung dieser Ausführungsform sind die Schalter der Zweihandschaltung an den oberen Enden der Handläufe angebracht. Auf diese Weise kann sich der Bediener bei der Betätigung der Zweihandschaltung an den Handläufen festhalten, wodurch die Sicherheit bei der Bedienung der Zweihandschaltung erhöht wird. Da die Handläufe auf gegenüberliegenden Seiten der Tritthilfe angeordnet sind, weisen diese einen ausreichenden Abstand für die Anbringung der beiden Schalter der Zweihandschaltung auf.

Bei einer weiteren Ausführungsform beträgt ein Abstand zwischen der Standfläche und dem oberen Rand des Fülltrichters weniger als 130 cm, bevorzugt weniger als 120 cm, insbesondere weniger als 100 cm. Da bei der Wahl eines solchen Abstands die Oberseite des Trichters ungefähr auf Hüfthöhe liegt, kann der Bediener den Fülltrichter vollständig, d.h. bis hinunter zum Förderwerk reinigen. Bei der Wahl eines Abstands von weniger als 110 cm darf jedoch der Durchmesser des Fülltrichters nicht größer als 110 cm sein, da ansonsten die Norm EN 12463:2004 nicht erfüllt werden kann, die festlegt, dass bei Fülltrichter-Durchmessern größer als 110 cm auch der Abstand zwischen Standfläche und oberem Rand des Fülltrichters größer als 110 cm sein muss.

Typischer Weise handelt es sich bei der oben beschriebenen Füllmaschine um einen Vakuumfüller, bei dem der Fülltrichter über dem Förderwerk verschliessbar ist. Bei derartigen Füllmaschinen wird im Förderwerk mit Hilfe einer Vakuumpumpe ein Unterdruck erzeugt, der dazu führt, dass die pastöse Masse in die Förderkammern des Förderwerks gesaugt wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1 a,b: schematische Darstellungen einer Ausführungsform einer erfindungsgemäßen Füllmaschine jeweils in einer Seitenansicht
- Fign. 2a-c: schematische Darstellungen einer Ausführungsform der Füllmaschine mit einer Standfläche mit einem verschwenkbaren Teilbereich, der mit einer Leiter gekoppelt ist,
- Fign. 3a,b: schematische Darstellungen einer weiteren Ausführungsform der Füllmaschine, bei der die gesamte Standfläche verschwenkbar ist, und
- Fign. 4a,b: schematische Darstellungen einer Ausführungsform der Füllmaschine, bei der zwei Teilbereiche der Standfläche über ein Gelenk miteinander verbunden sind.

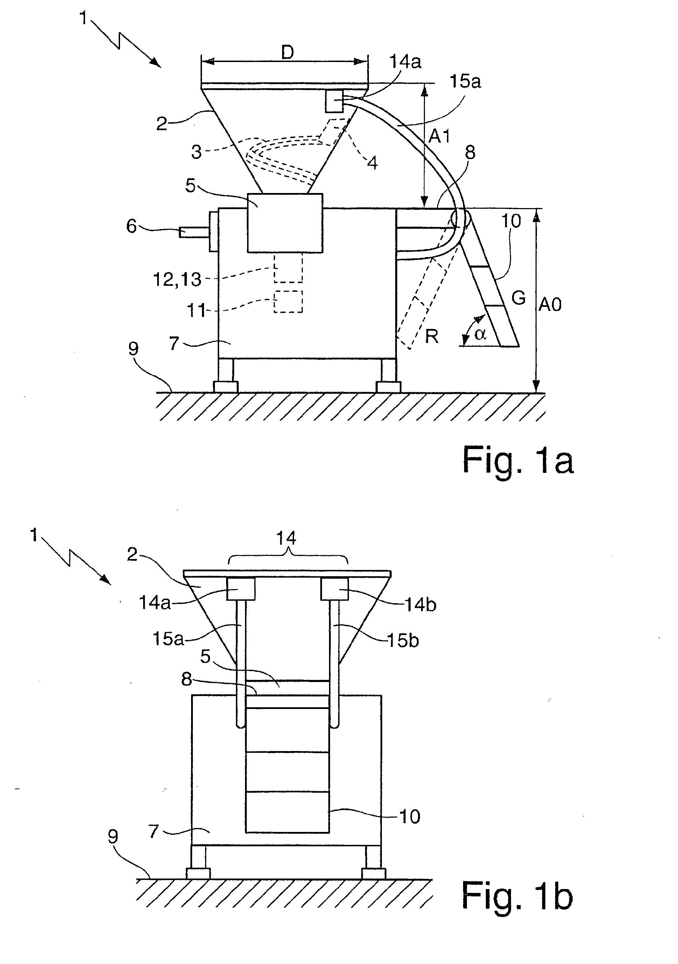

**Fign. 1a****,b** zeigen eine Füllmaschine **1** zum Abfüllen und Portionieren pastöser Masse, im vorliegenden Beispiel von Wurstbrät. Die Füllmaschine 1 weist einen Fülltrichter **2** auf, in dem eine drehbare Zuführeinrichtung **3** in Form einer umlaufenden Zubringerkurve angeordnet ist, an deren oberem Ende ein Schaber **4** angebracht ist, um das (nicht gezeigte) Wurstbrät vom Innenrand des Fülltrichters 2 zu lösen. Die Zubringerkurve 3 fördert das Wurstbrät zur Mitte hin und nach unten zu einem Förderwerk **5.**

Im vorliegenden Beispiel ist die Füllmaschine 1 als Vakuum-Füller ausgebildet, d.h. der Fülltrichter 2 ist verschließbar und im Förderwerk 5 wird mit Hilfe einer (nicht gezeigten) Vakuumpumpe ein Unterdruck erzeugt, der dazu führt, dass die pastöse Masse in Förderkammern des Förderwerks 5 gesaugt und dadurch portioniert wird. Das portionierte Wurstbrät wird dann über ein Füllrohr **6**, das am Grundkörper **7** der Füllmaschine 1 gebildet ist, in (nicht gezeigte) Wursthüllen ausgestoßen.

Um den Fülltrichter 2 bei einem Chargenwechsel zu reinigen, ist an dem Grundkörper 7 der Füllmaschine 1 eine Standfläche **8** in Form einer begehbaren Plattform angebracht. Die Plattform 8, die zum Boden **9**, auf dem die Füllmaschine 1 aufgestellt ist, einen Abstand **A0** von beispielsweise 120 cm aufweist, kann über eine Tritthilfe **10** erreicht werden, die im vorliegenden Beispiel als schwenkbare Leiter ausgebildet ist.

Hierbei ist ein Abstand **A1** zwischen der Standplattform 8 und dem oberen Rand des Fülltrichters 2 so gewählt, dass der auf der Standplattform 8 stehende Bediener den Fülltrichter 2 vollständig reinigen kann, d.h. die Oberseite des Fülltrichters 2 liegt ungefähr auf Hüfthöhe, so dass der Bediener den Fülltrichter 2 bis hinunter zum Förderwerk 5 reinigen kann. Der Abstand A1 zwischen der Standplattform 8 und dem oberen Rand des Fülltrichters 2 beträgt hierbei typischer Weise weniger als 130 cm, bevorzugt bei weniger als 120 cm, insbesondere weniger als 100 cm. Der Abstand A1 sollte aber nicht zu gering gewählt werden, um den Anforderungen der Norm EN 12463:2004 zu genügen, welche vorschreibt, dass der Abstand A1 bei Fülltrichter-Durchmessern **D** von 110 cm oder darüber mindestens 110 cm betragen muss, während bei Fülltrichter-Durchmessern von weniger als 110 cm der Abstand A1 nicht kleiner als 70 cm gewählt werden darf.

Um die Leiter 10 begehbar zu machen, muss diese aus einer in Fig. 1 a gestrichelt dargestellten Ruheposition **R** in eine Gebrauchsposition **G** verschwenkt werden, in der diese einen Winkel **α** von ≤ 70° zur Horizontalen aufweist. Sobald die Leiter 10 die Gebrauchsposition G erreicht hat, wird sowohl ein Antrieb **12** für das Förderwerk 5 als auch ein Antrieb **13** für die Zubringerkurve 3 gesperrt bzw. verriegelt, die ohne eine solche Verriegelung durch eine Steuerungseinrichtung **11** der Füllmaschine 1, die mit einer (nicht gezeigten) Bedieneinheit in Verbindung steht, angesteuert werden können. Auch weitere ggf. vorhandene Maschinenfunktionen, die bewegliche Teile im Bereich des Fülltrichters 2 ansteuern, können bei aktiver Verriegelung weder durch den auf der Plattform 8 befindlichen Bediener noch durch einen an der (nicht gezeigten) Bedieneinheit befindlichen Bediener aktiviert werden.

Die Sperre der Antriebe 12, 13 kann jedoch gelöst werden, falls ein auf der Plattform befindlicher Bediener gleichzeitig zwei Schalter **14a, 14b** einer Zweihandschaltung **14** (vgl. Fig. 1 b) aktiviert, die im vorliegenden Beispiel an den oberen Enden von Handläufen **15a, 15b** angeordnet sind, die sich entlang von einander gegenüberliegenden Rändern der Leiter 10 erstrecken und die dem Bediener auf der Standplattform 8 zusätzliche Sicherheit geben. Beim Betätigen der Zweihandschaltung 14 kann ein weiterer Bediener den Antrieb 12 des Förderwerks oder den Antrieb 13 der Zubringerkurve 3 aktivieren, um in dem Fülltrichter 2 vorhandenes Wurstbrät über das Füllrohr 6 auszustoßen.

Im vorliegenden Beispiel erfüllt die Zweihandschaltung 14 noch eine zusätzliche Funktion: Das beim simultanen Betätigen der Schalter 14a, 14b an die Steuerungseinrichtung 11 übermittelte Steuerungssignal dient auch dazu, den Antrieb 13 der Zubringerkurve 3 in eine langsame Drehung zu versetzen, damit der auf der Plattform 8 stehende Bediener den Fülltrichter 2 auch in Bereichen reinigen kann, die vor der Drehung von der Zubringerkurve 3 verdeckt waren. Die Steuerungseinrichtung 11 kann hierbei in Form von Hardware- und/oder Softwarekomponenten implementiert sein. Diese Komponenten sind so ausgelegt bzw. so programmiert, dass sich während des gesamten Zeitraums, in dem die Schalter 14a, 14b simultan betätigt werden, die Zubringerkurve 3 dreht.

Zusätzlich kann beim simultanen Betätigen der Schalter 14a, 14b die Steuerungseinrichtung 11 auch den Antrieb 12 des Förderwerks 5 aktivieren, um das Förderwerk in eine (langsame) Drehbewegung zu versetzen. Dies ermöglicht es, pastöse Masse, die beim Reinigungsprozess vom Bediener in die Füllkammern des Förderwerks 5 verbracht wurde, über das Füllrohr 6 auszustoßen. Es versteht sich, dass beim Betätigen der Schalter 14a, 14b nicht zwingend eine Drehung des Förderwerks 5 erfolgen muss, d.h. es ist auch möglich, dass beim Betätigen der Schalter 14a, 14b lediglich eine Drehung der Zubringerkurve 3 erfolgt. In diesem Fall kann nach dem Abschluss des Reinigungsvorgangs die Leiter 10 in die Ruheposition R verbracht und nachfolgend das Förderwerk 5 an einer (nicht gezeigten) Bedieneinheit aktiviert werden, um das beim Reinigungsvorgang in die Füllkammern verbrachte Wurstbrät über das Füllrohr 6 auszustoßen.

Es hat sich gezeigt, dass für das Einstellen einer gewünschten Winkel-Position der Zubringerkurve 3 durch Aktivierung der Zweihandschaltung 14 Drehzahlen günstig sind, die zwischen einer minimalen Drehzahl von 0,5 Umdrehungen/min, bevorzugt von 1 Umdrehung/min und einer maximalen Drehzahl von 5 Umdrehungen/min, bevorzugt von 3 Umdrehungen/min liegen, wobei die Drehzahl in der Regel konstant gewählt wird. Durch die Wahl einer Drehzahl, welche die oben angegebenen Maximal-Drehzahlen nicht überschreitet, kann der Bediener die Zubringerkurve 3 mit der gewünschten Genauigkeit positionieren. Durch die Wahl von Drehzahlen, welche die oben angegebenen Minimal-Drehzahlen nicht unterschreiten, wird erreicht, dass die Bewegung der Zubringerkurve 3 nicht zu lange dauert, so dass die Reinigung zügig durchgeführt werden kann.

Sobald die Zubringerkurve 3 die gewünschte Winkel-Position eingenommen hat, lässt der Bediener mindestens einen Schalter 14a, 14b der Zweihandschaltung 14 los, wodurch die Maschinenfunktionen deaktiviert werden und der Fülltrichter 2 weiter gereinigt werden kann. Auf diese Weise kann erreicht werden, dass der auf der Standplattform 8 stehende Bediener eine vollständig Reinigung des Fülltrichters 2 vornehmen kann, d.h. eine Reinigung auch in den Bereichen, die von der Zubringerkurve 3 vor dem Verdrehen verdeckt waren, ohne dass er zu diesem Zweck die Standplattform 8 verlassen muss.

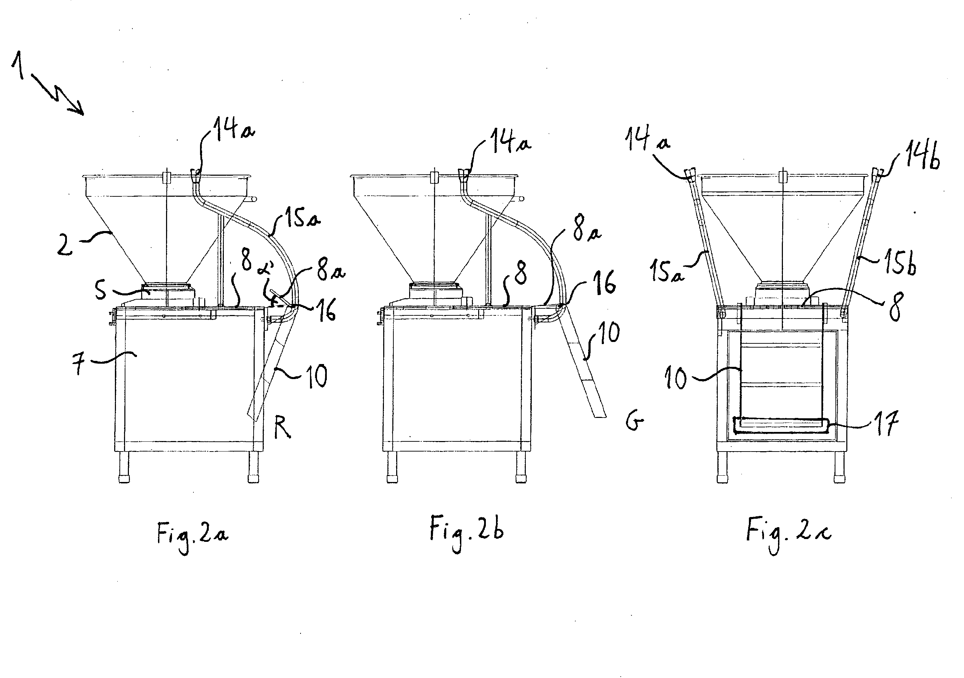

In Fign. 1a,b ist die gesamte Standfläche 8 in Form einer begehbaren Plattform an der Oberseite des Grundkörpers 7 der Füllmaschine 1 gebildet. Dies ist aber nicht zwingend erforderlich, vielmehr kann die Standfläche auch geteilt sein, wie nachfolgend im Zusammenhang mit **Fign. 2a****-c** beschrieben wird. Die dort gezeigte Standplattform 8 bildet nur ca. 2/3 der Standfläche, während das übrige Drittel der Standfläche ein verschwenkbarer Teilbereich **8a** ist, der mit dem oberen Ende der Leiter 10 gekoppelt bzw. starr an dieser angebunden ist und gemeinsam mit dieser um ein Gelenk **16** gedreht werden kann. Der Teilbereich 8a kann beispielsweise als Gitterrost ausgebildet sein und schließt mit der Leiter 10 typischer Weise einen Winkel von mehr als 90° ein. Auf diese Weise kann erreicht werden, dass der verschwenkbare Teilbereich 8a in der Ruhestellung R (vgl. Fig. 2a) der Leiter 10 unter einem Winkel **α**' von ca. 25° oder mehr zur Horizontalen verläuft, d.h. für einen Bediener in der Ruhestellung R nicht begehbar ist.

Wie Fig. 2a ebenfalls zu entnehmen ist, steht der verschwenkbare Teilbereich 8a in der Ruhestellung R nach oben über den Maschinengrundkörper 7 über, was es dem Bediener zusätzlich erschwert bzw. unmöglich macht, die Standplattform 8 zu betreten, ohne die Leiter 10 von der Ruhestellung R in die Gebrauchsstellung G zu verschwenken. Um den Winkel α', den der verschwenkbare Teilbereich 8a mit der Horizontalen einschließt, möglichst groß wählen zu können, ist es günstig, wenn der Grundkörper 7 der Füllmaschine 1 eine Ausnehmung **17** (vgl. Fig. 2c) zur Aufnahme des unteren Endes der Leiter 10 aufweist.

Alternativ zu der in Fign. 2a-c gezeigten Ausführung ist es auch möglich, dass der verschwenkbare Teilbereich 8a zusätzlich um einen umlaufenden Rahmen erweitert wird, der gemäß der eingangs zitierten Norm (Abschnitt 5.3.2.1.8.1) zur Sicherung der Standfläche erforderlich ist (und eine Höhe von ca. 15 mm aufweisen sollte). Der gesamte verschwenkbare Teilbereich 8a (inklusive Rahmen) entspricht somit der gesamten Fläche der Standfläche und weist somit typischer Weise Maße von ca. 500 mm x 400 mm oder darüber auf, wie sie in der eingangs zitierten Norm vorgeschrieben sind.

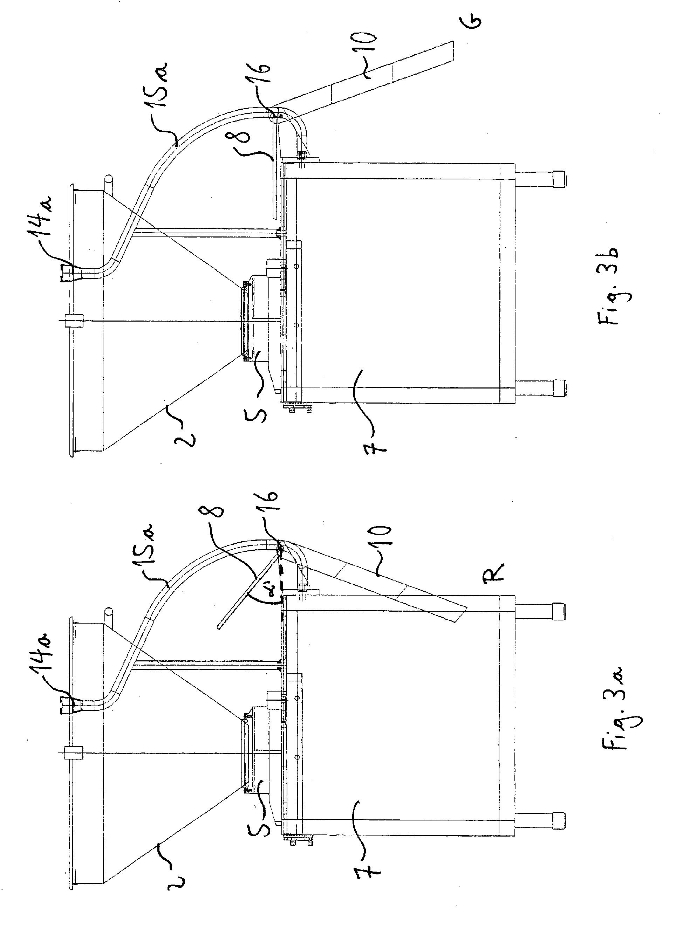

Wie in **Fign. 3a****,b** dargestellt ist, kann alternativ die gesamte Standfläche 8 mit der Leiter 10 gekoppelt sein und mit dieser um das Gelenk 16 verschwenkt werden. Auf diese Weise wird sichergestellt, dass der Bediener auf keinen Fall die Oberseite des Grundkörpers 7 als Standfläche nutzen kann, ohne die Leiter 10 in die in Fig. 3b dargestellte Gebrauchsstellung G zu bewegen. Es versteht sich, dass die Standfläche 8 anders als in Fig. 3b gezeigt in der Gebrauchsstellung G auch auf der Oberseite des Grundkörpers 7 der Füllmaschine 1 aufliegen kann.

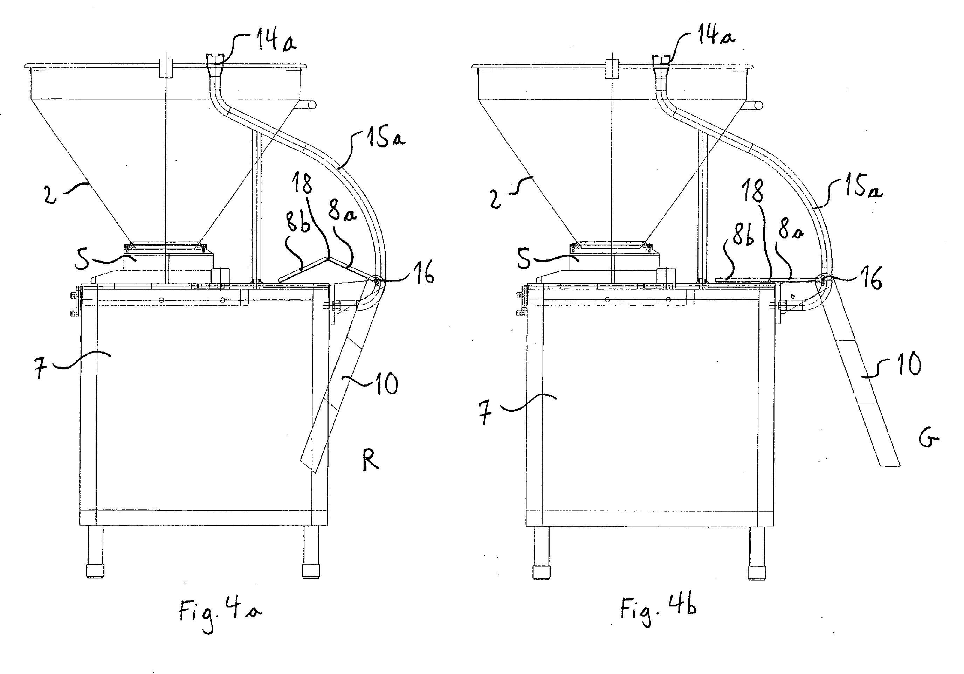

Eine weitere Möglichkeit, das Begehen der Standfläche ohne Verbringen der Leiter 10 in die Gebrauchsstellung G sicher zu verhindern, ist in **Fign. 4a****,b** dargestellt. Wie in Fign. 3a,b ist hierbei die gesamte Standfläche gemeinsam mit der Leiter 10 verschwenkbar; allerdings ist nur ein erster Teilbereich 8a der Standfläche starr mit der Leiter 10 gekoppelt, während ein zweiter Teilbereich 8b der Standfläche über ein weiteres Gelenk **18** an den ersten Teilbereich 8a angebunden ist. Wie in Fig. 4a erkennbar ist, kann der Bediener auch in diesem Fall in der Ruhestellung R die Teilbereiche 8a, 8b der Standfläche nicht begehen.

Die oben beschriebenen Maßnahmen zur Verhinderung der unerlaubten Benutzung der Standfläche sind insbesondere im Zusammenhang mit dem Vorsehen der Handläufe 15a, 15b günstig, da diese ggf. einen Benutzer dazu verleiten könnten, unerlaubter Weise auf die Standfläche zu klettern, ohne die Leiter 10 in die Gebrauchstellung G zu verbringen.

## Patentansprüche

1. Füllmaschine (1) zum Abfüllen pastöser Masse, umfassend:
einen Fülltrichter (2), in dem eine drehbare Zuführeinrichtung (3) zum Zuführen der pastösen Masse zu einem Förderwerk (5) angebracht ist,
eine bewegliche Tritthilfe (10) für einen Bediener, die in einer Gebrauchsstellung (G) das Erreichen einer Standfläche (8, 8a, 8b) zur Reinigung des Fülltrichters (2) ermöglicht, wobei in der Gebrauchsstellung (G) die Zuführeinrichtung (3) gegen Verdrehen verriegelt ist,
sowie eine im Bereich der Standfläche (8, 8a, 8b) angeordnete Zweihandschaltung (14), die beim Betätigen die Verriegelung aufhebt,
**dadurch gekennzeichnet,**
**dass** die Zweihandschaltung (14) mit einer Steuerungseinrichtung (11) zur Ansteuerung eines Antriebs (13) der Zuführeinrichtung (3) verbunden ist, wobei die Steuerungseinrichtung (11) ausgebildet ist, beim Betätigen der Zweihandschaltung (14) den Antrieb (3) der Zuführeinrichtung (3) zu aktivieren.

2. Füllmaschine nach Anspruch 1, bei der die Zuführeinrichtung durch eine Zubringerkurve (3) gebildet ist.

3. Füllmaschine nach einem der vorhergehenden Ansprüche, bei dem die Zuführeinrichtung (3) mit einer insbesondere konstanten Drehzahl von weniger als 5 Umdrehungen/min, bevorzugt von weniger als 3 Umdrehungen/min gedreht wird.

4. Füllmaschine nach einem der vorhergehenden Ansprüche, bei der die Zuführeinrichtung (3) mit einer insbesondere konstanten Drehzahl von mindestens 0,5 Umdrehungen/min, bevorzugt von mindestens 1 Umdrehung/min gedreht wird.

5. Füllmaschine nach einem der vorhergehenden Ansprüche, bei der die Steuerungseinrichtung (11) zur Ansteuerung eines Antriebs (12) des Förderwerks (5) ausgebildet ist, um beim Betätigen der Zweihandschaltung (14) den Antrieb (3) des Förderwerks (5) zu aktivieren.

6. Füllmaschine nach einem der vorhergehenden Ansprüche, bei der die Standfläche (8) durch eine Standplattform an dem Maschinengrundkörper (7) der Füllmaschine (1) gebildet ist.

7. Füllmaschine nach einem der vorhergehenden Ansprüche, **dadurch gekennzeichnet, dass** zumindest ein Teilbereich (8a) der Standfläche, insbesondere die gesamte Standfläche (8), mit der Tritthilfe (10) über ein Gelenk (16) verbunden und gemeinsam mit der Tritthilfe (10) verschwenkbar ist.

8. Füllmaschine nach Anspruch 7, bei welcher der Teilbereich (8a) der Standfläche, insbesondere die gesamte Standfläche (8), in einer Ruhestellung (R) der Tritthilfe (10) unter einem Winkel (α') von mehr als 25° zur Horizontalen verläuft und nach oben über den Maschinengrundkörper (7) übersteht.

9. Füllmaschine nach Anspruch 7 oder 8, bei welcher der verschwenkbare Teilbereich (8a) mindestens ein Drittel der Fläche der Standfläche umfasst.

10. Füllmaschine nach einem der Ansprüche 7 bis 9, bei welcher ein weiterer Teilbereich (8b) der Standfläche (8a, 8b) über ein weiteres Gelenk (18) an den mit der Tritthilfe (10) verbundenen Teilbereich (8a) angebunden ist.

11. Füllmaschine nach einem der vorhergehenden Ansprüche, bei der an gegenüberliegenden Rändern der Tritthilfe (10) im Bereich der Standfläche (8) jeweils ein Handlauf (15a, 15b) vorgesehen ist.

12. Füllmaschine nach Anspruch 11, bei der die Schalter (14a, 14b) der Zweihandschaltung (14) an den oberen Enden der Handläufe (15a, 15b) angebracht sind.

13. Füllmaschine nach einem der vorhergehenden Ansprüche, bei der ein Abstand (A) zwischen der Standfläche (8) und dem oberen Rand des Fülltrichters (2) weniger als 130 cm, bevorzugt weniger als 120 cm, insbesondere weniger als 100 cm beträgt.

## Claims

1. Filling machine (1) for filling paste mass, comprising:
a filling hopper (2), in which a rotatable feed device (3) is arranged for feeding the paste mass to a conveying system (5),
a movable foothold (10) for an operator, which enables the operator to reach a stand surface (8, 8a, 8b) for cleaning the feeding hopper (2) in a position of use (G), wherein the feed device (3) is locked against rotation in the position of use (G),
and a two-hand control (14) which is arranged in a region of the stand surface (8, 8a, 8b) and cancels locking upon operation,
**characterized in that**
the two-hand control (14) is connected to a control device (11) for controlling a drive (13) of the feed device (3), wherein the control device (11) is designed to activate the drive (13) of the feed device (3) upon operation of the two-hand control (14).

2. Filling machine according to claim 1, in which the feed device is formed by a feeder curve (3).

3. Filling machine according to any one of the preceding claims, in which the feed device (3) is rotated with an, in particular, constant rotational speed of less than 5 revolutions per minute, preferably, of less than 3 revolutions per minute.

4. Filling machine according to any one of the preceding claims, in which the feed device (3) is rotated with an, in particular, constant rotational speed of at least 0.5 revolution per minute, preferably of at least 1 revolution per minute.

5. Filling machine according to any one of the preceding claims, in which the control device (11) is designed to control a drive (12) of the conveying system (5) for activating the drive (12) of the conveying system (5) during operation of the two-hand control (14).

6. Filling machine according to any one of the preceding claims, in which the stand surface (8) is formed by a stand-on platform on the machine base body (7) of the filling machine (1).

7. Filling machine according to any one of the preceding claims, **characterized in that** at least a partial area (8a) of the stand surface, in particular the overall stand surface (8), is connected to the foothold (10) via a joint (16) and can be pivoted together with the foothold (10).

8. Filling machine according to claim 7, in which in a rest position (R) of the foothold (10), the partial area (8a) of the stand surface, in particular the overall stand surface (8), extends at an angle (α') of more than 25° with respect to the horizontal and projects in an upward direction past the machine base body (7).

9. Filling machine according to claim 7 or 8, in which the pivotable partial area (8a) comprises at least one third of the area of the stand surface.

10. Filling machine according to any one of the claims 7 to 9, in which a further partial area (8a) of the stand surface (8a, 8b) is connected via a further joint (18) to the partial area (8a) which is connected to the foothold (10).

11. Filling machine according to any one of the preceding claims, in which one hand rail (15a, 15b) is provided at each of the opposite edges of the foothold (10) in the area of the stand surface (8).

12. Filling machine according to claim 11, in which the switches (14a, 14b) of the two-hand control are mounted to the upper ends of the hand rails (15a, 15b).

13. Filling machine according to any one of the preceding claims, in which a separation (A1) between the stand space (8) and the upper edge of the filling hopper (2) is less than 130 cm, preferably less than 120 cm, in particular less than 100 cm.

## Revendications

1. Machine de remplissage (1) pour le remplissage d'une masse pâteuse, comprenant :
une trémie de remplissage (2), dans laquelle est installé un dispositif d'alimentation rotatif (3) pour apporter la masse pâteuse à un système de transport (5),
un marchepied mobile (10), qui est destiné à un opérateur et qui, dans une position d'utilisation (G), permet d'atteindre une surface de support (8, 8a, 8b) pour nettoyer la trémie de remplissage (2), sachant que le dispositif d'alimentation (3) est verrouillé en rotation dans la position d'utilisation (G),
et un dispositif de commutation bimanuelle (14), qui est disposé dans la région de la surface de support (8, 8a, 8b) et qui supprime le verrouillage lorsqu'il est actionné,
**caractérisée en ce que** le dispositif de commutation bimanuelle (14) est relié à un dispositif de commande (11) destiné à commander un entraînement (13) du dispositif d'alimentation (3), sachant que le dispositif de commande (11) est conçu pour activer l'entraînement (13) du dispositif d'alimentation (3) lors de l'actionnement du dispositif de commutation bimanuelle (14).

2. Machine de remplissage selon la revendication 1, dans laquelle le dispositif d'alimentation est formé par une courbe d'alimentation (3).

3. Machine de remplissage selon l'une des revendications précédentes, dans laquelle on fait tourner le dispositif d'alimentation (3) à une vitesse de rotation notamment constante de moins de 5 tours/min., de préférence de moins de 3 tours/min.

4. Machine de remplissage selon l'une des revendications précédentes, dans laquelle on fait tourner le dispositif d'alimentation (3) à une vitesse de rotation notamment constante d'au moins 0,5 tour/min., de préférence d'au moins 1 tour/min.

5. Machine de remplissage selon l'une des revendications précédentes, dans laquelle le dispositif de commande (11) est conçu pour commander un entraînement (12) du système de transport (5), afin d'activer l'entraînement (12) du système de transport (5) lors de l'actionnement du dispositif de commutation bimanuelle (14).

6. Machine de remplissage selon l'une des revendications précédentes, dans laquelle la surface de support (8) est formée par une plate-forme de support sur le corps de base (7) de la machine de remplissage (1).

7. Machine de remplissage selon l'une des revendications précédentes, **caractérisée en ce qu'**au moins une région partielle (8a) de la surface de support, et en particulier la totalité de la surface de support (8), est reliée au marchepied (10) par l'intermédiaire d'une articulation (16) et est pivotante conjointement avec le marchepied (10).

8. Machine de remplissage selon la revendication 7, dans laquelle la région partielle (8a) de la surface de support, et en particulier la totalité de la surface de support (8), dans une position de repos (R) du marchepied (10), s'étend sous un angle (α') supérieur à 25° par rapport à l'horizontale et dépasse du corps de base (7) de la machine vers le haut.

9. Machine de remplissage selon la revendication 7 ou 8, dans laquelle la région partielle pivotante (8a) occupe au moins un tiers de la superficie de la surface de support.

10. Machine de remplissage selon l'une des revendications 7 à 9, dans laquelle une autre région partielle (8b) de la surface de support (8a, 8b) est reliée par l'intermédiaire d'une autre articulation (18) à la région partielle (8a) reliée au marchepied (10).

11. Machine de remplissage selon l'une des revendications précédentes, dans laquelle une main courante (15a, 15b) est prévue sur chaque des bords opposés du marchepied (10) dans la région de la surface de support (8).

12. Machine de remplissage selon la revendication 11, dans laquelle les commutateurs (14a, 14b) du dispositif de commutation bimanuelle (14) sont installés aux extrémités supérieures des mains courantes (15a, 15b).

13. Machine de remplissage selon l'une des revendications précédentes, dans laquelle une distance (A1) entre la surface de support (8) et le bord supérieur de la trémie de remplissage (2) est inférieure à 130 cm, de préférence inférieure à 120 cm, en particulier inférieure à 100 cm.
